# FASCICULE DE BREVET EUROPEEN

(11) **EP 2 808 184 B1**
(45) Date de publication et mention de la délivrance du brevet: **06.06.2018**
(21) Numéro de dépôt: 14170316.5
(22) Date de dépôt: 28.05.2014
(51) Int. Cl.: B60D 1/07, B60D 1/02, B60D 1/06, B60D 1/52, B60D 1/48

(54) **Ensemble d'attelage double pour véhicule**
Doppelanhängerkupplungseinheit für Fahrzeug
Double hitch assembly for a vehicle

(30) Priorité: 28.05.2013 FR 1354810
(43) Date de publication de la demande: 03.12.2014
(73) Titulaire: Ur'ben, 12800 Naucelle (FR)
(72) Inventeur: Feral, Jean-Marc, 12330 Valady (FR); Flottes, Joël, 12120 Meljac (FR); Gaffard, Benjamin, 12000 Rodez (FR); Cavallari, Philippe, 81000 Albi (FR)
(74) Mandataire: Cabinet Plasseraud

(56) Documents cités:
- EP-A1- 2 596 966
- FR-A1- 2 740 079
- NL-A- 7 901 094

## Description

La présente invention concerne un ensemble d'attelage double pour véhicule, notamment un véhicule automobile de traction.

Les ensembles d'attelage concernés par la présente invention sont plus particulièrement les ensembles comportant deux modes d'attelage distincts pour remorquer un véhicule tracté de manière à pouvoir atteler deux types de remorques différents.

Le document FR-2 740 079 divulgue un attelage hippomobile qui présente deux moyens d'attelage d'un même type. L'ensemble proposé dans ce document nécessite une adaptation à la fois du véhicule qui tracte et de l'ensemble tracté.

Les documents GB-2 167 365 et DE-73 39 956 U présentent chacun un attelage double. Ils ne révèlent pas comment les dispositifs divulgués sont montés sur un véhicule de traction. En outre, les solutions proposées dans ce document ne permettent aucune adaptation de hauteur entre les moyens permettant de réaliser un premier mode d'attelage et les moyens permettant de réaliser un second mode d'attelage.

L'invention vise alors à fournir un ensemble d'attelage offrant deux modes d'attelage différents à des hauteurs de montage spécifiques tout en ayant un mode unique de liaison avec un châssis de véhicule de traction.

L'invention a également pour but de fournir un tel ensemble d'attelage dans lequel la traction de la remorque s'effectue dans tous les cas dans le plan médian du véhicule. En conséquence, il se produit au freinage et à l'accélération un couple de torsion dans l'attelage. Ce dernier doit donc être conçu de manière à résister à ce couple cyclique, notamment en fatigue.

Le document EP-2 596 966 divulgue un ensemble d'attelage avec des premiers moyens d'attelage ainsi que des seconds moyens d'attelage disposés les uns au-dessus des autres. Les premiers moyens d'attelage et les seconds moyens d'attelage sont fixés sur une plaque de montage et la plaque de montage est fixée sur une barre d'attelage à l'aide de moyens de fixation comportant deux équerres présentant chacune une première aile et une seconde aile, les premières ailes des équerres étant fixées sur deux faces opposées de la barre d'attelage et les deux secondes ailes définissant un plan sur lequel est fixé la plaque de montage.

Un but de la présente invention est de fournir un dispositif d'attelage compact de manière à limiter l'encombrement de l'attelage à l'arrière du véhicule auquel le dispositif d'attelage est destiné. La distance mesurée verticalement (ou l'altitude) entre un premier moyen d'attelage correspondant à un premier mode d'attelage et un second moyen d'attelage correspondant à un second mode d'attelage est de préférence réduite.

Le dispositif d'attelage sera en outre de préférence facile à intégrer sur un véhicule et ergonomique.

Avantageusement, l'invention permettra d'atteler au choix une remorque disposant d'un système d'attelage à boule normalisé, ou d'un système d'attelage non normalisé à chape.

L'invention a également pour but de fournir un véhicule automobile de traction muni d'un ensemble d'attelage qui permette d'atteler au choix des remorques disposant de types d'attelage distincts.

À cet effet, elle propose un ensemble d'attelage double pour véhicule comportant des premiers moyens d'attelage, des seconds moyens d'attelage ainsi que deux équerres présentant chacune une première aile et une seconde aile.

Selon la présente invention, les premières ailes sont fixées parallèlement l'une à l'autre en vis-à-vis ; les secondes ailes sont disposées de telle sorte qu'elles s'étendent à partir de la première aile correspondante en s'éloignant de l'autre équerre et de telle sorte que les secondes ailes soient parallèles mais décalées, et les premiers moyens d'attelage et les seconds moyens d'attelage sont fixés chacun sur une seconde aile d'une équerre.

Cette nouvelle structure permet, grâce au décalage des secondes ailes, de ne plus avoir les moyens d'attelage l'un au-dessus de l'autre. De ce fait, les moyens d'attelage peuvent être rapprochés, permettant ainsi de réaliser un ensemble d'attelage compact.

Un ensemble d'attelage selon l'invention peut en outre comporter une barre d'attelage. Dans ce cas, les équerres sont par exemple boulonnées sur la barre d'attelage prise en sandwich entre les deux premières ailes des équerres. Par barre d'attelage, on entend tout longeron, poutre, de type traverse, à fonction d'attelage, rapporté sur le châssis du véhicule ou faisant partie intégrante de celui-ci. Le châssis peut être un châssis de type à longeron, ou mécano-soudé, tubulaire, ou de type châssis-coque, ou plus généralement toute structure portante de véhicule.

Dans cette forme de réalisation intégrant une barre d'attelage, les équerres sont avantageusement fixées sur la barre d'attelage à l'aide de boulons traversant la barre d'attelage verticalement de part en part. Cette solution permet de simplifier le montage de l'ensemble selon l'invention.

Toujours dans le but de simplifier le montage de l'ensemble et d'augmenter ainsi l'ergonomie de cet ensemble, on prévoit avantageusement que les premiers moyens d'attelage et les seconds moyens d'attelage sont boulonnés sur les secondes ailes des équerres.

Une forme de réalisation avantageuse permettant d'obtenir une plus grande rigidité prévoit qu'au moins une équerre présente une face additionnelle s'étendant à partir de la première aile parallèlement à la seconde aile mais dans le sens opposé. On peut alors prévoir une fixation de cette face additionnelle sur une barre d'attelage ou autre dans une direction perpendiculaire à la fixation des premières ailes. Dans cette forme de réalisation, la première aile de ladite équerre comporte de préférence un premier bord à partir duquel s'étend la seconde aile ainsi qu'un second bord opposé au premier bord et à partir duquel s'étend la face additionnelle. L'équerre présente alors une forme en Z. Une alternative à cette forme de réalisation serait que la face additionnelle soit dans le prolongement de la seconde aile. On aurait alors une section en T de l'équerre, la base du T étant formée par la première aile.

Une forme de réalisation préférée prévoit que les deux équerres de l'ensemble d'attelage présentent une forme en Z. On a alors un ensemble d'attelage qui comporte deux équerres présentant chacune une face additionnelle s'étendant à partir de la première aile parallèlement à la seconde aile mais dans le sens opposé, la première aile de chaque équerre comportant un premier bord à partir duquel s'étend la seconde aile ainsi qu'un second bord opposé au premier bord et à partir duquel s'étend la face additionnelle. Une variante préférée prévoit que chaque face additionnelle se prolonge de manière à venir face à la seconde aile de l'autre équerre contre cette seconde aile. Une fixation entre les faces additionnelles et les secondes ailes des deux équerres peut alors être envisagée pour former un ensemble à la fois rigide et facile à monter. Un tel ensemble d'attelage peut alors prévoir, pour faciliter encore le montage, que des boulons assurent à la fois une fixation d'un moyen d'attelage sur une seconde aile d'une équerre et une liaison entre cette seconde aile et la face additionnelle de l'autre équerre.

Lorsqu'un ensemble d'attelage selon la présente invention comporte également une barre d'attelage comme évoqué plus haut, on peut prévoir qu'il comporte en outre des moyens de fixation de la barre d'attelage, que lesdits moyens de fixation comprennent deux ensembles de fixation présentant chacun une joue de montage sensiblement perpendiculaire à la barre d'attelage, ladite joue de montage possédant, d'un côté, des moyens de montage à un châssis de véhicule automobile de traction et, d'un autre côté, des moyens de serrage sur la barre d'attelage, et que les moyens de serrage comprennent une plaque d'appui pour recevoir la barre d'attelage et une bride de serrage boulonnée sur la plaque d'appui.

À titre d'exemple non limitatif, les premiers moyens d'attelage se présentent par exemple sous la forme d'un attelage à boule et/ou les seconds moyens d'attelage se présentent sous la forme d'un attelage à chape.

Enfin, la présente invention concerne également un véhicule automobile de traction, caractérisé en ce qu'il comprend un ensemble d'attelage tel que décrit ci-dessus.

Des détails et avantages de la présente invention apparaitront mieux de la description qui suit, faite en référence au dessin schématique annexé sur lequel :
La figure 1 est une vue en perspective éclatée d'un ensemble d'attelage selon l'invention montré sous un premier angle,
La figure 2 est une vue en perspective éclatée du même ensemble mais montré sous un angle différent,
La figure 3 est une vue de côté de l'ensemble d'attelage des figures 1 et 2 en position montée,
La figure 4 illustre une vue de face de l'ensemble monté de la figure 3, et
La figure 5 illustre un exemple de montage d'une barre d'attelage telle celle illustrée sur les figures précédentes sur un véhicule.

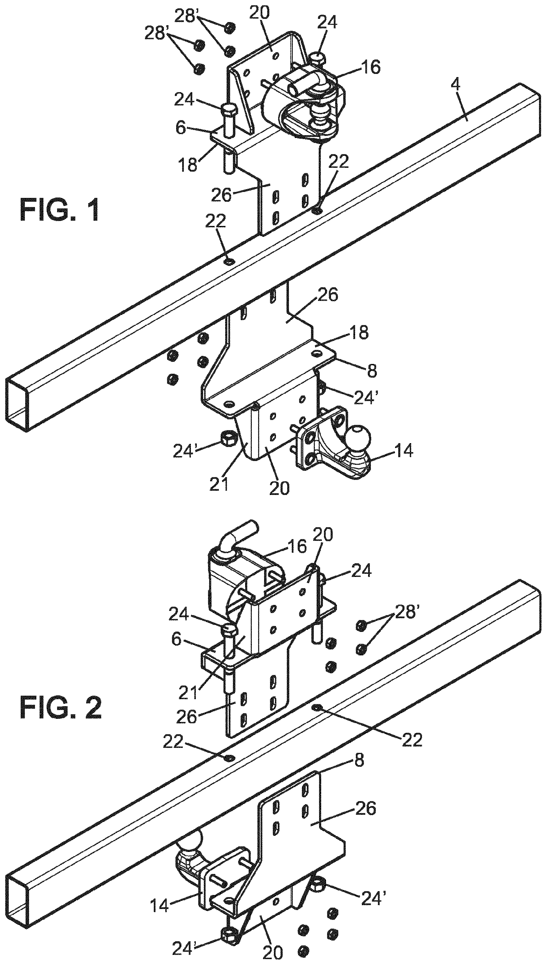

Les figures 1 et 2 illustrent sous des angles différents un ensemble d'attelage destiné à être monté à l'arrière d'un véhicule de traction non représenté.

L'ensemble d'attelage comporte une barre d'attelage 4, une première pièce appelée par la suite équerre supérieure 6, une seconde pièce appelée par la suite équerre inférieure 8, un attelage à boule 14 normalisé, un attelage à chape 16 ainsi que des moyens de fixation de ces divers éléments.

La barre d'attelage 4 est formée ici d'un profilé à section tubulaire, par exemple rectangulaire mais d'autres types de sections de profilés pourraient être utilisés. La barre d'attelage 4 est de préférence dimensionnée pour assurer en outre une fonction anti-encastrement arrière du véhicule de traction. Elle peut être rapportée sur un châssis du véhicule ou bien faire partie intégrante de ce châssis et/ou de ce véhicule.

Pour la suite de la description, on suppose que la barre d'attelage 4 est disposée horizontalement, c'est-à-dire que son axe longitudinal est à l'horizontale. Comme illustré sur le dessin, cette barre a une section rectangulaire et on suppose que cette section est orientée de manière à présenter une face supérieure horizontale, une face inférieure également horizontale ainsi que deux faces latérales verticales reliant la face supérieure à la face inférieure. L'orientation choisie est l'orientation "naturelle" qui correspond à l'orientation que l'on retrouve lorsque la barre d'attelage 4 est montée sur un véhicule. On définit ainsi une notion relative haut/bas qui sera utilisée dans la suite de la description.

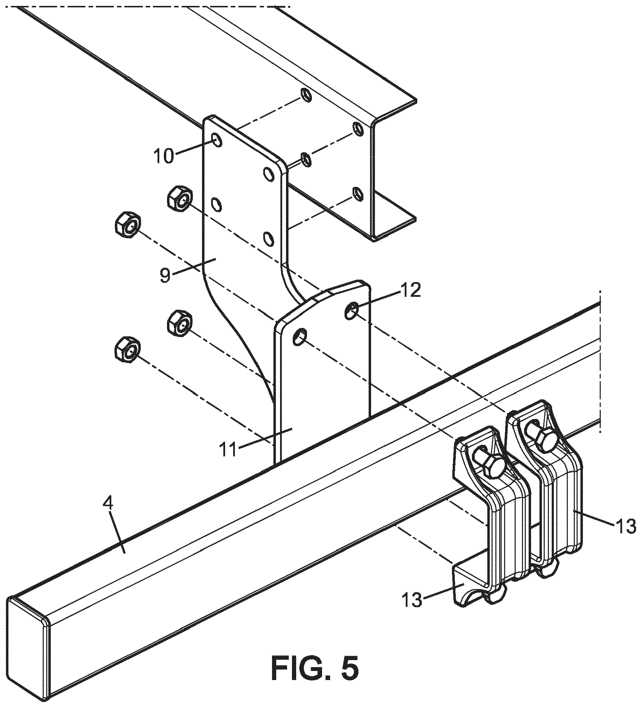

Dans le cas du montage de la barre d'attelage 4 sur un châssis de véhicule, la figure 5 propose par exemple de fixer ladite barre à des longerons du châssis. Sur cette figure, seule une extrémité d'un longeron est représentée. On prévoit alors deux ensembles de fixation tel celui représenté sur la figure 5 pour le montage de la barre d'attelage 4 sur le châssis du véhicule. Un ensemble de fixation, dans la forme de réalisation illustrée, comprend une joue 9 de montage formée d'une plaque coudée ayant à l'une de ses extrémités des moyens de montage sur le châssis qui comportent des trous 10 permettant un boulonnage sur un longeron 3. La figure 5 illustre en perspective éclatée une fixation d'une joue 9 de manière extérieure à un longeron de châssis. À son autre extrémité, la joue 9 présente une plaque d'appui 11 soudée qui lui est perpendiculaire et qui est percée de trous 12 formant ainsi des moyens utilisés pour réaliser un serrage de la barre d'attelage 4. La joue 9 est fixée parallèlement au plan médian du véhicule de sorte que la plaque d'appui 11 fait face à l'arrière du véhicule. Elle est adaptée à une interface de reprise sur le châssis, ou à une interface d'intégration à celui-ci le cas échéant.

Chaque ensemble de fixation (tel celui illustré sur la figure 5) comporte en outre deux brides 13 à section en U boulonnée dans les trous 12 de la plaque d'appui 11 correspondante de manière à emprisonner et à serrer la barre d'attelage 4. Cette dernière peut donc être positionnée à volonté perpendiculairement au plan médian du véhicule de manière que les moyens d'attelage (attelage à boule 14 et attelage à chape 16) soient dans ce plan médian, et ce quel que soit l'écartement des longerons du châssis du véhicule. Les brides 13 de fixation peuvent adopter la forme d'un ou plusieurs étriers à section filaire par exemple.

Les joues 9 de montage sont de préférence dimensionnées de manière que la barre d'attelage 4 soit positionnée pour assurer en outre la fonction anti-encastrement arrière du véhicule tracteur.

Les moyens d'attelage (attelage à boule 14 et attelage à chape 16) sont montés sur la barre d'attelage 4 par des moyens de montage comportant essentiellement l'équerre supérieure 6 et l'équerre inférieure 8.

L'équerre supérieure 6 est similaire à l'équerre inférieure 8 dans la forme de réalisation préférée illustrée sur les figures. Chaque équerre présente une première aile 18 et une seconde aile 20. Des nervures 21 sont prévues ici entre chaque première aile 18 et la seconde aile 20 correspondante. La barre d'attelage 4 est percée sur ses faces horizontales de trous 22 pour le passage vertical de boulons (vis 24 et écrous 24'). Des trous sont aussi percés dans la première aile 18 de chaque équerre permettant de fixer chaque équerre par sa première aile 18 sur la barre d'attelage 4. Les premières ailes 18 sont alors disposées horizontalement. Les vis 24 sont assez longues pour traverser entièrement la barre d'attelage 4 et assurer ainsi simultanément la fixation des deux équerres sur celle-ci.

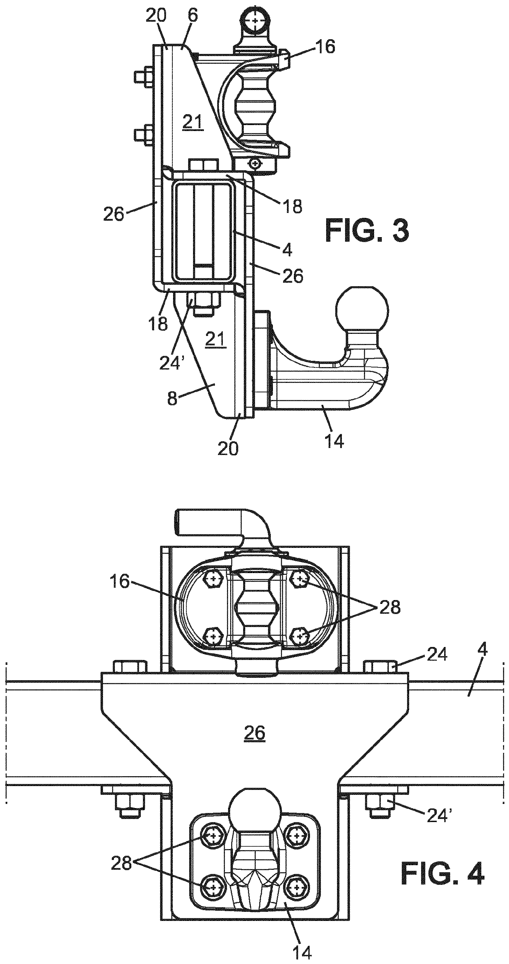

Les équerres sont positionnées de telle manière que les secondes ailes 20 s'étendent verticalement et soient toutes deux parallèles. La seconde aile 20 de l'équerre supérieure 6 s'étend vers le haut (en s'éloignant donc de la barre d'attelage 4 et de l'équerre inférieure 8) et la seconde aile 20 de l'équerre inférieure 8 s'étend vers le bas (en s'éloignant donc de la barre d'attelage 4 et de l'équerre supérieure 6). Comme on peut le voir sur la figure 3, la seconde aile 20 de l'équerre supérieure 6 s'étend dans un plan se trouvant légèrement en avant par rapport à la barre d'attelage 4 tandis que la seconde aile 20 de l'équerre inférieure 8 se trouve légèrement en arrière de la barre d'attelage 4. L'orientation avant/arrière correspond ici à l'orientation liée au véhicule sur lequel la barre d'attelage 4 est montée, les attelages (attelage à boule 14 et attelage à chape 16 se trouvant à l'arrière du véhicule).

Chaque équerre comporte en outre une face additionnelle 26 s'étendant dans un plan vertical à hauteur notamment de la barre d'attelage 4. Ainsi, la face additionnelle 26 de l'équerre supérieure 6 s'étend à partir de la première aile 18 de cette équerre vers le bas tandis que la face additionnelle 26 de l'équerre inférieure 8 s'étend à partir de la première aile 18 de cette équerre vers le haut.

Dans une forme de réalisation préférée, chaque équerre présente ainsi une forme en Z qui peut être obtenue par deux pliages à 90° dans deux sens opposés et autour de deux lignes de pliages parallèles, les lignes de pliages correspondant sensiblement à deux bords, dits bords longitudinaux, de la première aile 18. Chaque équerre peut ainsi être obtenue par découpe et pliage d'une tôle. Une opération de soudure peut aussi être envisagée pour venir souder les nervures 21.

Dans cette forme de réalisation, on prévoit avantageusement que chaque face additionnelle 26 s'étend de préférence suffisamment pour pouvoir venir se trouver face à la seconde aile 20 de l'autre équerre et au contact de cette seconde aile 20. En fixant alors les faces additionnelles 26 aux secondes ailes 20, on forme avec les deux équerres un ensemble très rigide, quasiment indéformable. Cet ensemble présente entre les premières ailes 18 et les faces additionnelles 26 un logement parallélépipédique qui reçoit la barre d'attelage 4.

Pour la fixation des faces additionnelles 26 avec les secondes ailes 20, il est prévu d'utiliser quatre boulons (quatre vis 28 et quatre écrous 28') par fixation. Des trous sont prévus à cet effet à la fois dans les faces additionnelles 26 et dans les secondes ailes 20. Pour pouvoir adapter la taille du logement recevant la barre d'attelage 4 à la taille de cette dernière, des trous oblongs orientés verticalement sont prévus. Sur les figures, ces trous oblongs sont prévus sur les faces additionnelles 26 mais pourraient également prendre place sur les secondes ailes 20.

Avantageusement, les vis 28 et les écrous 28' associés sont également utilisés pour la fixation des attelages. L'attelage à chape 16 est fixé sur la seconde aile 20 de l'équerre supérieure 6. Cette seconde aile 20 est positionnée en avant par rapport à l'autre seconde aile 20 (de l'équerre inférieure 8). L'attelage à boule 14 est fixé sur la seconde aile 20 de l'équerre inférieure 8. On remarque ici que la face additionnelle 26 de l'équerre supérieure 6 s'interpose entre la seconde aile 20 et l'attelage à boule 14.

On peut également utiliser une (ou des) vis 28 et un (ou des) écrou(s) 28' pour la fixation d'une platine (non représentée mais illustrée par exemple sur la figure 7A de EP-2 596 966 avec la référence 18) de prise électrique d'attelage et de crochet pour le câble de frein de secours. Suivant les boulons de montage utilisés pour cette dernière fonction, la platine peut occuper différentes positions (haut, bas, gauche, droite) pour s'adapter à la remorque à tracter.

Le montage de l'ensemble d'attelage sur la barre d'attelage 4 est simple et rapide à réaliser. Il suffit de tout d'abord venir fixer à l'aide des vis 24 et écrous 24' les deux équerres sur la barre d'attelage. Les équerres sont alors positionnées et il suffit de venir monter les attelages sur les secondes ailes des équerres.

Comme on peut le voir au mieux sur la figure 3, les attelages sont décalés, l'attelage supérieur (attelage à chape 16) étant décalé vers l'avant par rapport à l'attelage inférieur (attelage à boule 14). Cette configuration permet de minimiser la distance mesurée verticalement (ou altitude) entre les attelages. En effet, l'espace au-dessus de l'attelage à boule 14 est entièrement libre et lorsqu'une remorque vient s'atteler sur cet attelage, elle n'est pas gênée par l'autre attelage. De même, l'attelage à boule 14 ne gêne pas lors de l'attelage d'une remorque sur l'attelage à chape 16.

Les équerres peuvent assurer également le rôle de pièces de renfort dont l'inertie est appropriée selon les besoins, notamment en fonction de la charge à tracter. Les équerres peuvent être réalisées par pliage comme évoqué plus haut mais aussi par exemple par forgeage.

Comme il ressort de la description qui précède, un dispositif selon la présente invention permet d'offrir deux points de fixation pour deux modes d'attelage différents et ceci à des hauteurs de montage spécifiques différentes tout en ayant un mode unique de liaison avec un châssis d'un véhicule tracteur. Cela procure l'avantage aux véhicules tracteurs pourvus d'un seul emplacement pour traverse remorquante de pouvoir atteler de façon optimale deux types de remorques (par exemple attelage à boule "type caravane" à altitude normalisée et attelage à oeil à altitude non normalisée et usuellement beaucoup plus haute).

Le dispositif décrit présente, d'une part, une traverse rectangulaire (la barre d'attelage) et, d'autre part, un support qui dédouble les fixations d'attelage. Ces deux pièces sont liées de préférence par deux boulons traversant la traverse rectangulaire verticalement de part en part.

Le système de bridage avec des joues de montage pour la fixation de la barre d'attelage sur le véhicule, ou plus précisément des longerons d'un véhicule dans le mode décrit et illustré, permet de réaliser de manière continue tous les entraxes de "joue de châssis" afin de s'adapter à n'importe quel largeur de châssis de véhicule tracteur et peut se fixer aussi bien côté intérieur ou côté extérieur des longerons qui constituent le châssis du véhicule tracteur.

En adaptant les dimensions de la traverse rectangulaire, cette dernière peur remplir en plus de sa fonction de support pour le dispositif d'attelage, la fonction de dispositif anti-encastrement arrière pour le véhicule tracteur (hauteur 100 mm, altitude de la surface inférieure à moins 550 mm du sol, extrémités à moins de 100 mm de la largeur des pneumatiques).

Dans le dispositif décrit ci-dessus, les deux boulons traversants déterminent la position de montage des attelages pour qu'ils se situent exactement sur le plan médian longitudinal du véhicule tracteur.

Comme évoqué plus haut, le dispositif selon l'invention présente l'avantage de permettre une fixation par boulonnage d'un support supplémentaire permettant d'offrir une fixation à une prise électrique d'attelage et d'un crochet pour le câble de frein de secours, ceci à différentes positions pour s'adapter à la remorque à tracter.

Un dispositif selon l'invention permet d'adapter la position relative de deux modes d'attelage pour qu'elle soit compatible avec des zones de dégagement exigées par les normes d'attelage de chacun des modes d'attelage.

L'invention permet aussi grâce à un système de bridage similaire à celui de la traverse rectangulaire de réaliser simplement un support pour des feux du véhicule tracteur, des radars de reculs, une plaque d'immatriculation ou une signalisation complémentaire.

On a ainsi un système très simple, modulable et répondant aux exigences techniques d'un attelage. Ce système est en outre compact et facile à mettre en oeuvre.

Bien entendu, la présente invention ne se limite pas à la forme de réalisation préférée décrite ci-dessus à titre d'exemple non limitatif et aux variantes évoquées. Elle concerne également toutes les variantes de réalisation à la portée de l'homme du métier dans le cadre des revendications ci-après.

## Revendications

1. Ensemble d'attelage double pour véhicule comportant des premiers moyens d'attelage (14), des seconds moyens d'attelage (16) ainsi que deux équerres (6, 8) présentant chacune une première aile (18) et une seconde aile (20),
**caractérisé en ce que** les premières ailes (18) sont fixées parallèlement l'une à l'autre en vis-à-vis,
**en ce que** les secondes ailes (20) sont disposées de telle sorte qu'elles s'étendent à partir de la première aile (18) correspondante en s'éloignant de l'autre équerre et de telle sorte que les secondes ailes (20) soient parallèles mais décalées, et
**en ce que** les premiers moyens d'attelage (14) et les seconds moyens d'attelage (16) sont fixés chacun sur une seconde aile (20) d'une équerre.

2. Ensemble d'attelage selon la revendication 1, **caractérisé en ce que** les équerres (6, 8) sont boulonnées sur une barre d'attelage (4) prise en sandwich entre les deux premières ailes des équerres (6, 8).

3. Ensemble d'attelage selon la revendication 2, **caractérisé en ce que** les équerres (6, 8) sont fixées sur la barre d'attelage (4) à l'aide de boulons (24, 24') traversant la barre d'attelage (4) verticalement de part en part.

4. Ensemble d'attelage selon l'une des revendications 1 à 3, **caractérisé en ce que** les premiers moyens d'attelage (14) et les seconds moyens d'attelage (16) sont boulonnés sur les secondes ailes (20) des équerres (6, 8).

5. Ensemble d'attelage selon l'une quelconque des revendications 1 à 4, **caractérisé en ce qu'**au moins une équerre (6, 8) présente une face additionnelle (26) s'étendant à partir de la première aile (18) parallèlement à la seconde aile (20) mais dans le sens opposé.

6. Ensemble d'attelage selon la revendication 5, **caractérisé en ce que** la première aile (18) de ladite équerre comporte un premier bord à partir duquel s'étend la seconde aile (20) ainsi qu'un second bord opposé au premier bord et à partir duquel s'étend la face additionnelle (26).

7. Ensemble d'attelage selon l'une des revendications 1 à 6, **caractérisé en ce qu'**il comporte deux équerres (6, 8) présentant chacune une face additionnelle (26) s'étendant à partir de la première aile (18) parallèlement à la seconde aile (20) mais dans le sens opposé, la première aile de chaque équerre (6, 8) comportant un premier bord à partir duquel s'étend la seconde aile (20) ainsi qu'un second bord opposé au premier bord et à partir duquel s'étend la face additionnelle (26), et **en ce que** chaque face additionnelle (26) se prolonge de manière à venir face à la seconde aile (20) de l'autre équerre contre cette seconde aile (20).

8. Ensemble d'attelage selon la revendication 7, **caractérisé en ce que** des boulons (28, 28') assurent à la fois une fixation d'un moyen d'attelage sur une seconde aile (20) d'une équerre (6, 8) et une liaison entre cette seconde aile (20) et la face additionnelle (26) de l'autre équerre.

9. Ensemble d'attelage selon l'une des revendications 2 ou 3, **caractérisé en ce qu'**il comporte en outre des moyens de fixation de la barre d'attelage (4), **en ce que** lesdits moyens de fixation comprennent deux ensembles de fixation présentant chacun une joue de montage (9) sensiblement perpendiculaire à la barre d'attelage, ladite joue de montage possédant, d'un côté, des moyens de montage (10) à un châssis de véhicule automobile de traction et, d'un autre côté, des moyens de serrage (11, 13) sur la barre d'attelage (4), et **en ce que** les moyens de serrage comprennent une plaque d'appui (11) pour recevoir la barre d'attelage (4) et une bride de serrage (13) boulonnée sur la plaque d'appui (11).

10. Ensemble d'attelage selon l'une des revendications 1 à 9, **caractérisé en ce que** les premiers moyens d'attelage se présentent sous la forme d'un attelage à boule (14).

11. Ensemble d'attelage selon l'une des revendications 1 à 10, **caractérisé en ce que** les seconds moyens d'attelage se présentent sous la forme d'un attelage à chape (16).

12. Véhicule automobile de traction, **caractérisé en ce qu'**il comprend un ensemble d'attelage selon l'une des revendications précédentes.

## Patentansprüche

1. Doppelanhängerkupplungseinheit für ein Fahrzeug, umfassend erste Kupplungsmittel (14), zweite Kupplungsmittel (16) sowie zwei Winkel (6, 8), die jeweils einen ersten Flügel (18) und einen zweiten Flügel (20) aufweisen,
**dadurch gekennzeichnet, dass** die ersten Flügel (18) parallel zueinander gegenüberliegend befestigt sind,
dass die zweiten Flügel (20) derart angeordnet sind, dass sie sich ausgehend von dem entsprechenden ersten Flügel (18) erstrecken, wobei sie sich von dem anderen Winkel entfernen, und derart, dass die zweiten Flügel (20) parallel, aber versetzt sind, und
dass die ersten Kupplungsmittel (14) und die zweiten Kupplungsmittel (16) jeweils an einem zweiten Flügel (20) eines Winkels befestigt sind.

2. Anhängerkupplungseinheit nach Anspruch 1, **dadurch gekennzeichnet, dass** die Winkel (6, 8) mit einer Kupplungsstange (4) verschraubt sind, die sich sandwichartig zwischen den zwei ersten Flügeln der Winkel (6, 8) befindet.

3. Anhängerkupplungseinheit nach Anspruch 2, **dadurch gekennzeichnet, dass** die Winkel (6, 8) an der Kupplungsstange (4) mithilfe von Schrauben (24, 24') befestigt sind, welche die Kupplungsstange (4) vertikal von einer Seite zur anderen durchqueren.

4. Anhängerkupplungseinheit nach einem der Ansprüche 1 bis 3, **dadurch gekennzeichnet, dass** die ersten Kupplungsmittel (14) und die zweiten Kupplungsmittel (16) mit den zweiten Flügeln (20) der Winkel (6, 8) verschraubt sind.

5. Anhängerkupplungseinheit nach einem der Ansprüche 1 bis 4, **dadurch gekennzeichnet, dass** wenigstens ein Winkel (6, 8) eine zusätzliche Fläche (26) aufweist, die sich ausgehend von dem ersten Flügel (18) parallel zum zweiten Flügel (20), aber in entgegengesetzter Richtung, erstreckt.

6. Anhängerkupplungseinheit nach Anspruch 5, **dadurch gekennzeichnet, dass** der erste Flügel (18) des Winkels Folgendes umfasst: einen ersten Rand, von dem aus sich der zweite Flügel (20) erstreckt, sowie einen zweiten Rand, der dem ersten Rand entgegengesetzt ist und von dem aus sich die zusätzliche Fläche (26) erstreckt.

7. Anhängerkupplungseinheit nach einem der Ansprüche 1 bis 6, **dadurch gekennzeichnet, dass** sie zwei Winkel (6, 8) umfasst, die jeweils eine zusätzliche Fläche (26) aufweisen, die sich ausgehend von dem ersten Flügel (18) parallel zum zweiten Flügel (20), aber in entgegengesetzter Richtung, erstreckt, wobei der erste Flügel jedes Winkels (6, 8) Folgendes umfasst: einen ersten Rand, von dem aus sich der zweite Flügel (20) erstreckt, sowie einen zweiten Rand, der dem ersten Rand entgegengesetzt ist und von dem aus sich die zusätzliche Fläche (26) erstreckt, und dass jede zusätzliche Fläche (26) derart verlängert ist, dass sie gegenüber dem zweiten Flügel (20) des anderen Winkels an diesem zweiten Flügel (20) zur Anlage kommt.

8. Anhängerkupplungseinheit nach Anspruch 7, **dadurch gekennzeichnet, dass** Schrauben (28, 28') gleichzeitig eine Befestigung eines Kupplungsmittels an einem zweiten Flügel (20) eines Winkels (6, 8) und eine Verbindung zwischen diesem zweiten Flügel (20) und der zusätzlichen Fläche (26) des anderen Winkels gewährleisten.

9. Anhängerkupplungseinheit nach einem der Ansprüche 2 oder 3, **dadurch gekennzeichnet, dass** sie ferner Mittel zur Befestigung der Kupplungsstange (4) umfasst, dass diese Befestigungsmittel zwei Befestigungseinheiten umfassen, die jeweils eine Montagebacke (9) aufweisen, die im Wesentlichen senkrecht zur Kupplungsstange ist, wobei die Montagebacke auf einer Seite Mittel (10) zur Montage an einem Fahrgestell eines Zugkraftfahrzeugs und auf einer anderen Seite Mittel (11, 13) zum Festklemmen an der Kupplungsstange (4) aufweist, und dass die Festklemmmittel eine Auflageplatte (11) zur Aufnahme der Kupplungsstange (4) und einen mit der Auflageplatte (11) verschraubten Klemmflansch (13) umfassen.

10. Anhängerkupplungseinheit nach einem der Ansprüche 1 bis 9, **dadurch gekennzeichnet, dass** die ersten Kupplungsmittel in Form einer Kugelkupplung (14) vorliegen.

11. Anhängerkupplungseinheit nach einem der Ansprüche 1 bis 10, **dadurch gekennzeichnet, dass** die zweiten Kupplungsmittel in Form einer Fangmaulkupplung (16) vorliegen.

12. Zugkraftfahrzeug, **dadurch gekennzeichnet, dass** es eine Anhängerkupplungseinheit nach einem der vorhergehenden Ansprüche umfasst.

## Claims

1. Double hitch assembly for a vehicle comprising first hitching means (14), second hitching means (16) and two angle brackets (6, 8), each of which has a first flange (18) and a second flange (20),
**characterised in that** the first flanges (18) are secured parallel to and facing one another,
**in that** the second flanges (20) are positioned such that they extend from the first corresponding flange (18) in a direction away from the other angle bracket and such that the second flanges (20) are parallel but offset, and
**in that** the first hitching means (14) and the second hitching means (16) are each secured to a second flange (20) of an angle bracket.

2. Hitch assembly according to claim 1, **characterised in that** the angle brackets (6, 8) are bolted onto a draw bar (4) sandwiched between the two first flanges of the angle brackets (6, 8).

3. Hitch assembly according to claim 2, **characterised in that** the angle brackets (6, 8) are secured to the draw bar (4) using bolts (24, 24') passing vertically through the draw bar (4) end to end.

4. Hitch assembly according to one of claims 1 to 3, **characterised in that** the first hitch means (14) and the second hitch means (16) are bolted onto the second flanges (20) of the angle brackets (6, 8).

5. Hitch assembly according to any of claims 1 to 4, **characterised in that** at least one angle bracket (6, 8) has an additional face (26) extending from the first flange (18) parallel to the second flange (20), but in the opposite direction thereto.

6. Hitch assembly according to claim 5, **characterised in that** the first flange (18) of said angle bracket comprises a first edge from which extends the second flange (20), in addition to a second edge opposite the first edge and from which extends the additional face (26).

7. Hitch assembly according to one of claims 1 to 6, **characterised in that** it comprises two angle brackets (6, 8), each having an additional face (26) extending from the first flange (18) parallel to the second flange (20), however in the opposite direction thereto, the first flange of each angle bracket (6, 8) comprising a first edge from which extends the second flange (20), in addition to a second edge opposite the first edge and from which extends the additional face (26), and **in that** each additional face (26) extends such that it comes to face the second flange (20) of the other angle bracket against said second flange (20).

8. Hitch assembly according to claim 7, **characterised in that** the bolts (28, 28') serve both to secure a hitching means onto a second flange (20) of an angle bracket (6, 8) and to create a link between said second flange (20) and the additional face (26) of the other angle bracket.

9. Hitch assembly according to either claim 2 or claim 3, **characterised in that** it further comprises fastening means for securing the draw bar (4), **in that** said fastening means comprise two fastening assemblies, each of which having an assembly wall (9) substantially perpendicular to the draw bar, said assembly wall having, on one side thereof, assembly means (10) for assembly to a frame of a tractive motor vehicle and, on the other side thereof, clamping means (11, 13) for clamping to the draw bar (4), and **in that** the clamping means comprise a bearing plate (11) for receiving the draw bar (4) and a clamp (13) bolted to the bearing plate (11).

10. Hitch assembly according to one of claims 1 to 9, **characterised in that** the first hitching means are present in the form of a ball mount (14).

11. Hitch assembly according to one of claims 1 to 10, **characterised in that** the second hitching means are present in the form of a clevis mount (16).

12. Tractive motor vehicle **characterised in that** it comprises a hitch assembly according to one of the previous claims.
